# EUROPÄISCHE PATENTSCHRIFT

(11) **EP 2 238 358 B1**
(45) Veröffentlichungstag und Bekanntmachung des Hinweises auf die Patenterteilung: **19.06.2013**
(21) Anmeldenummer: 09707989.1
(22) Anmeldetag: 06.02.2009
(51) Int. Cl.: F16B 7/04

(54) **KLEMMVERBINDER**
CLAMPING CONNECTOR
CONNECTEUR À SERRAGE

(30) Priorität: 08.02.2008 EP 08002331
(43) Veröffentlichungstag der Anmeldung: 13.10.2010
(73) Patentinhaber: Hestex Systems B.V., 7332 BE Apeldoorn (NL)
(72) Erfinder: OFFENBROICH, Adrian, 40217 Düsseldorf (DE)
(74) Vertreter: Stenger, Watzke & Ring
(86) Internationale Anmeldenummer: PCT/EP2009/000814
(87) Internationale Veröffentlichungsnummer: WO 2009/098065

(56) Entgegenhaltungen:
- DE-A1- 3 821 625
- DE-U1- 20 103 064
- DE-U1- 29 801 893
- US-A1- 2007 158 630
- US-B1- 6 334 732

## Beschreibung

Die vorliegende Erfindung betrifft einen Klemmverbinder zur lösbaren Verbindung zweier Bauelemente, mit einem Gehäuse, welches in einem Aufnahmeraum eines ersten der Bauelemente festlegbar ist, wobei in dem Gehäuse ein mittels eines Antriebs zwischen einem verriegelnden und einem nicht verriegelnden Zustand bewegbares Ankerelement einer Ankereinheit angeordnet ist, welches Ankerelement zur Verbindung der Bauelemente im verriegelten Zustand in eine Ausnehmung eines zweiten Bauelements eingreift.

Gattungsgemäße Vorrichtungen, in der Regel Klemmverbinder oder auch Spannschloss genannt, finden im Stand der Technik Anwendung, wenn beispielsweise bei Regalsystemen, Messeaufbauten oder dergleichen Verbindungsstrukturen in Form von Verbindungen zwischen Bauelementen wie Rahmenteilen, Pfosten, Streben, Regalböden oder dergleichen ausgebildet werden sollen. Hierbei werden die einzelnen Bauelemente wie Pfosten, Streben und dergleichen mit Hilfe gattungsgemäßer Klemmverbinder in einer Schnellverbindetechnik zusammengefügt, so dass ein schneller Auf- sowie Abbau des Regalsystems, des Messeaufbaus oder dergleichen erreicht werden kann.

Ein gattungsgemäßer Klemmverbinder ist aus der EP 1 234 985 B1 bekannt geworden. Obgleich sich dieser vorbekannte Klemmverbinder im alltäglichen Praxiseinsatz bewährt hat, besteht Verbesserungsbedarf, insbesondere mit Blick auf eine vereinfachte Handhabung, insbesondere im Montage- beziehungsweise Demontagefall.

Ein gattungsgemäßer Klemmverbinder ist aus der DE 298 01 893U1 bekannt geworden.

Es ist deshalb die **Aufgabe** der Erfindung, einen Klemmverbinder der gattungsgemäßen Art dahingehend weiterzubilden, dass eine vereinfachte Handhabung desselben ermöglicht ist.

Zur **Lösung** dieser Aufgabe wird mit der Erfindung ein Klemmverbinder der gattungsgemäßen Art vorgeschlagen, der sich dadurch auszeichnet, dass zur Festlegung des Gehäuses relativ gegenüber dem ersten Bauelement wenigstens zwei Haltestifte vorgesehen sind, die mit korrespondierenden Ausnehmungen des ersten Bauelements zusammenwirken.

Beim Klemmverbinder nach dem Stand der Technik, wie er beispielsweise aus der EP 1 234 985 B1 bekannt ist, durchragt im endmontierten Zustand das Betätigungselement des Antriebs eine im zugehörigen Bauteil vorgesehene Ausnehmung. Durch diese Konstellation wird eine Festlegung des Klemmverbinders in Längsrichtung desselben gegenüber dem zugehörigen Bauelement erreicht. Eine andere Abstützung des Klemmverbinders gegenüber diesem Bauelement ist nicht gegeben, was in der Vergangenheit immer wieder zu Problemen geführt hat. Als nachteilig wurde insbesondere empfunden, dass eine gegebenenfalls nur schwergängige Betätigung des Betätigungselements möglich ist. Auch ungewollte Verklemmungen, die eine reibungslose und einfache Montage beziehungsweise Demontage verhindern beziehungsweise dieser entgegenstehen, wurden als nachteilig empfunden.

Die erfindungsgemäße Ausgestaltung schafft hier Abhilfe. Denn ist mit der erfindungsgemäßen Ausgestaltung vorgesehen, dass eine Abstützung des Klemmverbinders gegenüber dem zugehörigen Bauteil nicht allein über das Betätigungselement des Antriebes erfolgt. Es sind erfindungsgemäß vielmehr Haltestifte vorgesehen, die diese Abstützfunktion übernehmen, womit in vorteilhafterweise eine Entlastung des Betätigungselements erreicht wird.

Im festgelegten Zustand des Gehäuses im Aufnahmeraum können die Haltestifte in Ausnehmungen des ersten Bauelements eingreifen, so dass das Gehäuse relativ gegenüber dem ersten Bauelement fixiert ist. Hierdurch kann der Antrieb von Einwirkungen weitestgehend freigehalten werden, die seinen bestimmungsgemäßen Betrieb behindern können, beispielsweise eine Scherbeanspruchung auf das Betätigungselement des Antriebs. Die Bauelemente können beispielsweise als Hohlprofil oder dergleichen ausgebildet sein. Sie können aus einem geeigneten Werkstoff wie Aluminium, Stahl, Holz, Verbundwerkstoffen oder dergleichen gebildet sein. Die Haltestifte können aus einem Metall wie Stahl, einer Eisenlegierung, einer Aluminiumlegierung oder dergleichen gebildet sein. Darüber hinaus können die Haltestifte aber auch aus einem Verbundwerkstoff gebildet sein, beispielsweise einem faserverstärkten Kunststoff oder dergleichen. Durch das Vorsehen zweier Haltestifte können Verkantungen des Gehäuses weitgehend vermieden werden, insbesondere wenn die Haltestifte an gegenüberliegenden Seiten des Gehäuses angeordnet sind. Der Antrieb kann ein Betätigungselement beispielsweise in Form eines Bolzens aufweisen, an dem ein Werkzeug ansetzbar ist, mit dem der Bolzen drehbar angetrieben werden kann. Hierfür kann der Bolzen eine entsprechende Ausnehmung oder Ausformung aufweisen, beispielsweise zum Ansatz eines Schlüssels oder dergleichen. Der Bolzen kann darüber hinaus einen exzentrischen Zapfen an einem gegenüberliegenden Ende aufweisen, welcher auf das Ankerelement einwirkt, so dass eine Drehbewegung des Bolzens in eine translatorische Bewegung des Ankerelements umgesetzt werden kann. Insgesamt kann erreicht werden, dass der Antrieb unabhängig von einer Beanspruchung des Klemmverbinders bestimmungsgemäß genutzt werden kann. Besonders vorteilhaft kann erreicht werden, dass eine Drehmomentbeanspruchung des Antriebs im Wesentlichen unabhängig von einer Beanspruchung des Klemmverbinders ist.

Eine Weiterbildung sieht vor, dass jeder Haltestift entlang seiner Längsachse bewegbar ist. Dies ermöglicht es, zur Montage des Klemmverbinders in dem Aufnahmeraum die Haltestifte derart zu bewegen, dass sie ein Einführen des Klemmverbinders in den Aufnahmeraum nicht behindern. Bei Erreichen der vorgesehenen Endstellung des Klemmverbinders in dem Aufnahmeraum können die Haltestifte derart bewegt werden, dass sie in die korrespondierenden Ausnehmungen des ersten Bauelements, insbesondere Bohrungen in Seitenwänden des Aufnahmeraums eingreifen können, so dass sie zur Festlegung des Gehäuses relativ gegenüber dem ersten Bauelement zusammenwirken. Hierdurch lässt sich eine einfache Montage des Klemmverbinders in dem Aufnahmeraum des ersten Bauelements erreichen.

Weiterhin wird vorgeschlagen, dass die Haltestifte durch Öffnungen des Gehäuses hindurch von innen nach außen ragen. Diese Ausgestaltung erlaubt es, die Haltestifte zwecks Montage des Gehäuses in dem Aufnahmeraum des ersten Bauelements vollständig in das Gehäuse hineinzuverfahren, so dass das Gehäuse in dem Aufnahmeraum im Wesentlichen unbehindert verschoben werden kann. Dies erlaubt es darüber hinaus, ein Gehäuse aus dem Aufnahmeraum wieder zu entfernen, in dem die Haltestifte aus den Ausnehmungen des ersten Bauelements heraus verfahren werden, indem sie durch die Öffnungen des Gehäuses in das Gehäuse hinein bewegt werden. So kann der Klemmverbinder auch auf einfache Weise ausgetauscht werden.

Die Haltestifte können elastisch vorgespannt sein. Hierdurch kann erreicht werden, dass sie eine vorgegebene Position automatisch einnehmen. Eine Montage beziehungsweise Demontage des Gehäuses in dem Aufnahmeraum lässt sich weiter vereinfachen. So kann beispielsweise vorgesehen sein, dass die Haltestifte derart elastisch vorgespannt sind, dass sie automatisch in das Gehäuse hinein bewegt werden, sofern keine die Bewegung hindernde Mittel eingreifen. Daneben kann aber auch vorgesehen sein, dass die Haltestifte elastisch derart vorgespannt sind, dass sie eine Position automatisch einnehmen, in der sie maximal aus dem Gehäuse heraus nach außen ragen. Diese Ausgestaltung eignet sich beispielsweise dafür, das Gehäuse bei Erreichen seiner vorgesehenen Position im Aufnahmeraum automatisch zu verrasten. Die Haltestifte sind nach außen elastisch vorgespannt und gleiten beim Verschieben des Gehäuses im Aufnahmeraum entlang einer Wand des Aufnahmeraumes, bis die vorgesehene Position des Gehäuses im Aufnahmeraum erreicht ist und die Haltestifte in die Bohrungen der Wand des Aufnahmeraumes automatisch aufgrund ihrer Vorspannung eingreifen. So lässt sich eine einfache Montage des Klemmverbinders an dem ersten Bauelement erreichen.

Die Haltestifte können koaxial angeordnet sein. Hierdurch kann eine symmetrische Beanspruchung der Haltestifte sowie des Gehäuses erreicht werden.

Weiterhin kann der Klemmverbinder eine Hülse aufweisen, in der die Haltestifte längsverschiebbar gelagert sind. Diese Ausgestaltung ermöglicht es, eine separate Baugruppe zu bilden, die in dem Gehäuse auf einfache Weise befestigt werden kann. Die Hülse kann zugleich eine Führung der Haltestifte bewirken, so dass eine zuverlässige Bewegbarkeit der Haltestifte erreicht werden kann. Ein Verkanten der Haltestifte und damit verbundene Behinderungen ihrer Längsbewegung können reduziert werden.

In der Hülse zwischen den Haltestiften kann eine Feder angeordnet sein. Die Feder kann beispielsweise als Spiralfeder, Tellerfeder oder dergleichen ausgebildet sein. Sie kann aus einem elastischen Werkstoff wie Federstahl, Kunststoff oder dergleichen gebildet sein. Vorzugsweise stützt sich die Feder an den gegenüberliegenden Stirnseiten der Haltestifte ab und spannt diese vor. Auf diese Weise lässt sich einfach eine Vorspannung für die Haltestifte erzeugen.

Eine Weiterbildung schlägt vor, dass die Hülse mit dem Gehäuse verbindbar ist. Die Hülse kann beispielsweise mittels Befestigungsmitteln wie Schrauben, Nieten oder dergleichen mit dem Gehäuse verbunden sein. Sie kann aber auch formschlüssig mit dem Gehäuse verbunden sein. Insbesondere wenn die Hülse mit den Haltestiften und gegebenenfalls der Feder eine Baugruppe bildet, kann auf diese Weise eine einfache Herstellung des Klemmverbinders erreicht werden. Darüber hinaus kann die Zuverlässigkeit erhöht werden, weil die Hülse die Haltestifte und die Feder in einer koaxialen Position zueinander führen kann. Insbesondere bei einem rauen Einsatz kann somit verhindert werden, dass Haltestifte oder die Feder gegeneinander verrutschen und die Funktion gestört ist.

Eine weitere Ausgestaltung der Erfindung sieht vor, dass der Klemmverbinder einen Antrieb für die Haltestifte aufweist. Dies erlaubt es, die Haltestifte je nach Bedarf in eine gewünschte Position zu verfahren, um beispielsweise den Klemmverbinder an dem ersten Bauelement festzulegen oder ihn von diesem zu lösen. Die Montage beziehungsweise Demontage des Klemmverbinders in dem Aufnahmeraum des ersten Bauelements kann weiter vereinfacht werden. Der Antrieb kann beispielsweise durch einen Schieber, einen Drehstift oder dergleichen gebildet sein.

Besonders vorteilhaft erweist es sich, wenn die Haltestifte mit dem Antrieb für die Ankereinheit betätigbar sind. Hierdurch wird erreicht, dass lediglich ein einziger Antrieb für den Klemmverbinder erforderlich ist, mit dem sowohl die Haltestifte als auch die Ankereinheit betätigt werden können. So können Bauteile eingespart werden und die Kosten reduziert werden. Darüber hinaus erleichtert diese Ausgestaltung eine Bedienung des Klemmverbinders, da zur Betätigung der Haltestifte und der Ankereinheit lediglich ein einziger Antrieb betätigt werden muss.

Eine Weiterbildung sieht vor, dass der Antrieb einen Betätigungsabschnitt umfasst, der mit Widerlagern der Haltestifte zusammenwirkt. So kann mittels des Betätigungsabschnittes und der Widerlager eine einfache Übertragung einer Bewegung des Antriebs auf eine Bewegung der Haltestifte erreicht werden. Der Betätigungsabschnitt kann beispielsweise durch einen Hebel oder dergleichen gebildet sein. Die Widerlager können beispielsweise durch Ausformungen an den Haltestiften ausgebildet sein.

Das Widerlager kann ferner durch eine gegenüber einer Längsachse des Haltestifts geneigte Fläche gebildet sein. Dies ermöglicht eine einfache Ausgestaltung des Widerlagers, die kostengünstig herzustellen ist und zugleich eine zuverlässige Funktion gewährleistet. Die Fläche kann beispielsweise an einem radialen Vorsprung beziehungsweise Absatz des Haltestifts angeordnet sein. Die Fläche kann sowohl eben als auch gekrümmt ausgebildet sein. Eine gekrümmte Fläche kann eine Adaption an ein aufzubringendes Drehmoment am Antrieb bewirken.

Eine vorteilhafte Weiterbildung sieht vor, dass der Betätigungsabschnitt einstückig mit dem Ankerelement ausgebildet ist. Auf diese Weise kann die Anzahl der Bauelemente weiter reduziert werden.

Weiterhin kann vorgesehen sein, dass die Haltestifte in jeder durch sie einnehmbaren axialen Position durch die Öffnungen des Gehäuses geführt sind. Hierdurch kann eine Führung der Haltestifte weiter verbessert werden, so dass eine axiale Bewegung der Haltestifte nicht durch Verkantungen oder dergleichen behindert werden kann. Weiterhin lässt sich ein Spiel der Haltestifte reduzieren, so dass eine genauere Führung der Haltestifte, insbesondere in Verbindung mit der Hülse erreichbar ist.

Weitere Vorteile und Merkmale sind der folgenden Beschreibung eines Ausführungsbeispiels zu entnehmen. Die Figuren sind Schemazeichnungen und dienen lediglich der Erläuterung des folgenden Ausführungsbeispiels.

Es zeigen:
- Fig. 1: in Draufsicht eine schematische Darstellung eines Spannschlosses gemäß der Erfindung in einem verriegelnden Zustand einer Ankereinheit des Spannschlosses,
- Fig. 2: das Spannschloss gemäß Fig. 1 in einer seitlichen Schnittansicht entlang einer Linie II-II,
- Fig. 3: das Spannschloss in Fig. 1 in einem nicht verriegelnden Zustand der Ankereinheit,
- Fig. 4: das Spannschloss gemäß Fig. 3 in einer seitlichen Schnittansicht entlang einer Linie IV-IV,
- Fig. 5: eine Draufsicht auf das Spannschloss gemäß Fig. 1 in einem nicht verriegelnden Zustand sowie mit eingezogenen Haltestiften, wobei das Gehäuse im Bereich der Haltestifte aufgebrochen ist,
- Fig. 6: das Spannschloss gemäß Fig. 5 in einer seitlichen Schnittdarstellung entlang einer Linie VI-VI,
- Fig. 7: eine perspektivische Darstellung des Gehäuses des Spannschlosses gemäß einer der vorrangehenden Figuren,
- Fig. 8: eine perspektivische Darstellung eines Haltestifts des in den vorangehenden Figuren dargestellten Spannschlosses,
- Fig. 9: eine seitliche Ansicht des Haltestifts gemäß Fig. 8,
- Fig. 10: eine perspektivische Ansicht einer Hülse, in der die Haltestifte längsverschieblich gelagert sind und
- Fig. 11: eine schematische Darstellung einer Verbindung einer Strebe mit einem Pfosten unter Verwendung des in den vorangehenden Figuren dargestellten Spannschlosses.

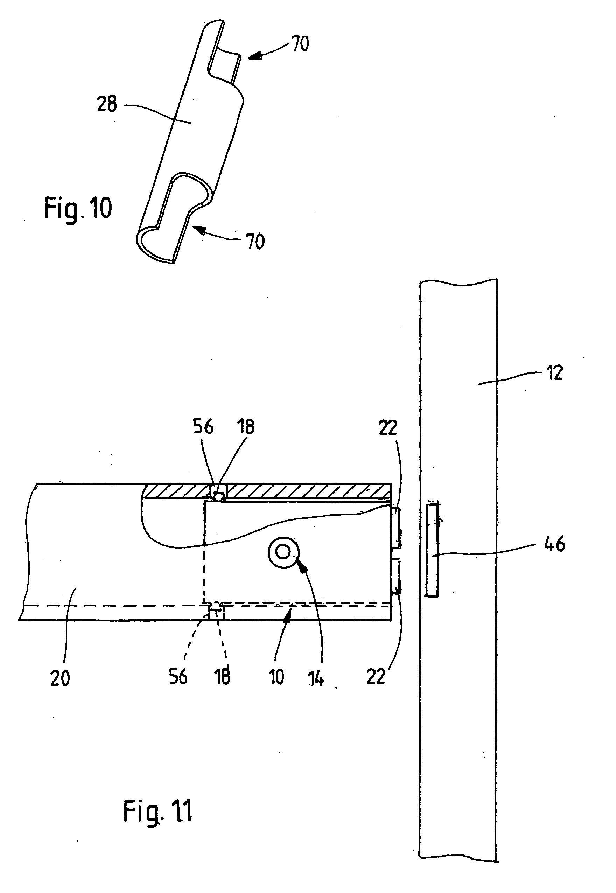

In Fig. 11 ist schematisch eine prinzipielle Verbindung einer Strebe 20 als erstes Bauelement mit einem Pfosten 12 als zweites Bauelement dargestellt. Der Pfosten 12 ist vorliegend als Hohlprofil ausgebildet und weist eine rechteckförmige Öffnung 46 etwa mittig seiner Längserstreckung auf. Im Bereich der Öffnung 46 soll die Strebe 20 unter Vermittlung eines im folgenden Spannschloss genannten Klemmverbinders 10 der Erfindung am Pfosten 12 festgelegt werden. Hierzu ist die Strebe 20 stirnseitig mit einer nicht bezeichneten Ausnehmung versehen, in die das Spannschloss 10 einsetzbar ist.

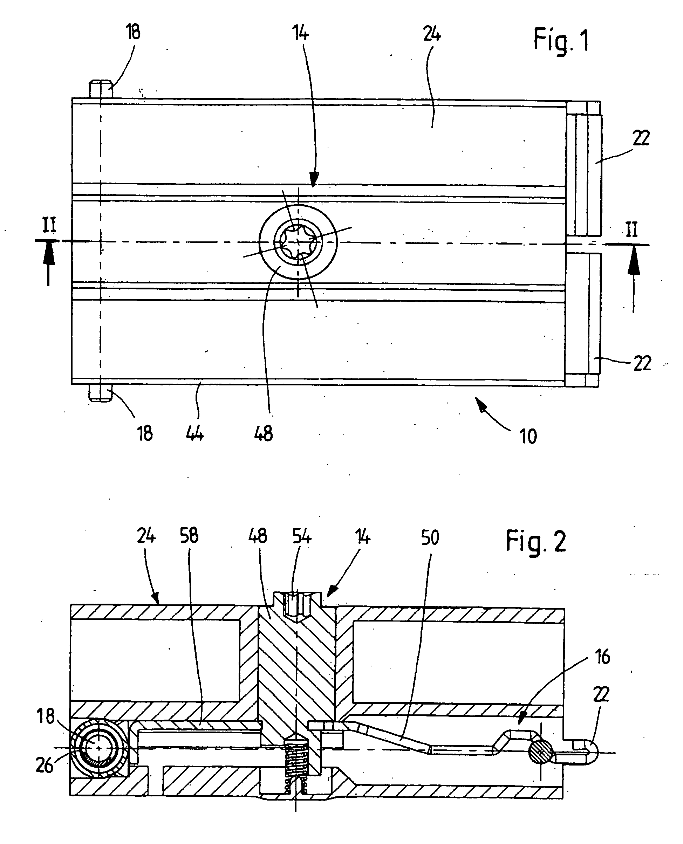

Erkennbar ist in Fig. 11, dass Klauen 22 von Ankerelementen 50 einer Ankereinheit 16 (Fig. 2) stirnseitig über die Strebe 20 hinausragen. Die Klauen 22 sind derart ausgebildet, dass sie bei geeigneter Betätigung eines Antriebs 14 des Spannschlosses 10 seitliche Ränder der Öffnung 46 des Pfostens 12 hintergreifen und auf diese Weise die Strebe 20 am Pfosten 12 festlegen. Durch eine entgegengesetzte Betätigung des Antriebs 14 kann die Verbindung wieder gelöst werden, indem die Klauen 20 in eine Position verfahren werden, in der die Ränder der Öffnung 46 nicht mehr hintergriffen werden, das heißt, freigegeben sind. Die Strebe 20 kann somit auf einfache Weise vom Pfosten 12 gelöst werden.

Fig. 1 zeigt nun schematisch in einer Draufsicht das Spannschloss 10 gemäß der Erfindung. Das Spannschloss 10 weist ein Gehäuse 24 mit einer Wand 44 auf, in dem neben zwei Haltestiften 18, mittels denen das Spannschloss 10 an der Strebe 20 festlegbar ist, auch der Antrieb 14 sowie die Ankereinheit 16 (Fig. 2) mit Klauen 22 und Ankerelementen 50 angeordnet sind. Der Antrieb 14 weist einen Bolzen 48 als Betätigungselement auf, der durch eine Öffnung 64 des Gehäuses 24 nach außen ragt und eine Torx-Ausnehmung 54 aufweist, in die formschlüssig ein entsprechender Steckschlüssel ansetzbar ist, mittels dem der Bolzen 48 manuell verdreht werden kann. Vorliegend ist demnach ein manueller Antrieb 14 vorgesehen. Gleichwohl kann natürlich auch ein entsprechend ausgerüsteter Akku-Schrauber oder dergleichen an dem Bolzen 48 für Antriebszwecke angesetzt werden.

In Fig. 2 ist schematisch eine seitliche Schnittdarstellung entlang einer Linie II-II in Fig. 1 dargestellt. Zu erkennen ist, dass der Bolzen 48 mit einer nicht bezeichneten exzentrischen Verlängerung direkt auf das Ankerelement 50 mit der Klaue 22 einwirkt. Hierdurch wird eine Drehbewegung des Bolzens 48 in eine translatorische Bewegung des Ankerelements 50 sowie der Klaue 22 umgesetzt. In der in den Figuren 1 und 2 dargestellten Position ist das Spannschloss 10 in seinem verriegelnden Zustand.

Aus den Figuren 1 und 2 ist ferner ersichtlich, dass zwei axial gegenüberliegende Haltestifte 18 seitlich aus dem Gehäuse 24 herausragen. Die Haltestifte 18 ragen durch Öffnungen 26 des Gehäuses 24 hindurch von innen nach außen. Jeder Haltestift 18 ist entlang seiner Längsachse 34 bewegbar. Die Haltestifte 18 greifen im aus dem Gehäuse 24 herausragenden Zustand in korrespondierende Bohrungen 56 der Strebe 20 (Fig. 11), wodurch aufgrund des Zusammenwirkens von Haltestiften 18 und Bohrungen 56 das Spannschloss 10 an der Strebe 20 lagefixiert festgelegt ist. Auf der dem Bolzen 48 gegenüberliegenden Seite ist das Ankerelement 50 in Form eines Hebels 58 verlängert und ragt in einen Bereich des Gehäuses 24, in dem die Haltestifte 18 angeordnet sind. Wie im Folgenden noch erläutert werden wird, dient der Hebel 58 dazu, einen Antrieb zu bewirken, mit dem die Haltestifte 18 axial verschiebbar sind.

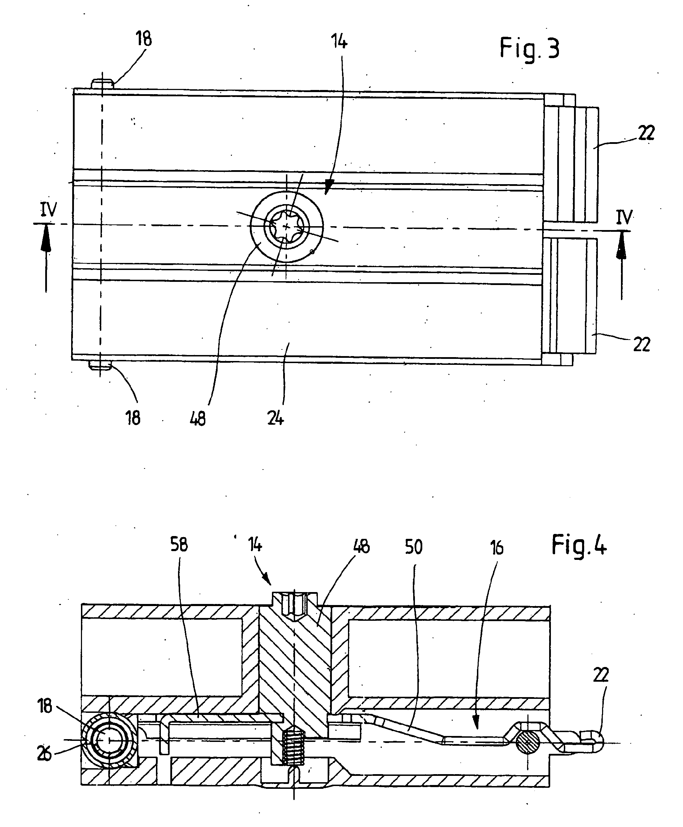

In den Figuren 3 und 4 ist das Spannschloss 10 gemäß den Figuren 1 und 2 in dem nicht verriegelnden Zustand dargestellt. Im Übrigen entspricht die Darstellung den entsprechenden Figuren 1 und 2. Zu erkennen ist hier im Unterschied zu den Figuren 1 und 2, dass einerseits die Klauen 22 weiter aus dem Gehäuse 24 herausragen, als es in den Figuren 1 und 2 dargestellt ist. Die Haltestifte 18 befinden sich in einer teilweise in das Gehäuse 24 hereingefahrenen Stellung. Trotzdem ragen die Haltestifte 18 noch derart aus dem Gehäuse 24 heraus, dass das Spannschloss 10 nach wie vor an der Strebe 20 festgelegt ist. In dieser Stellung kann die Strebe 20 mit dem Spannschloss 10 vom Pfosten 12 entfernt oder angesetzt werden. Das Spannschloss 10 ist mit der Strebe 20 über die Haltestifte 18 und die Bohrungen 56 verbunden.

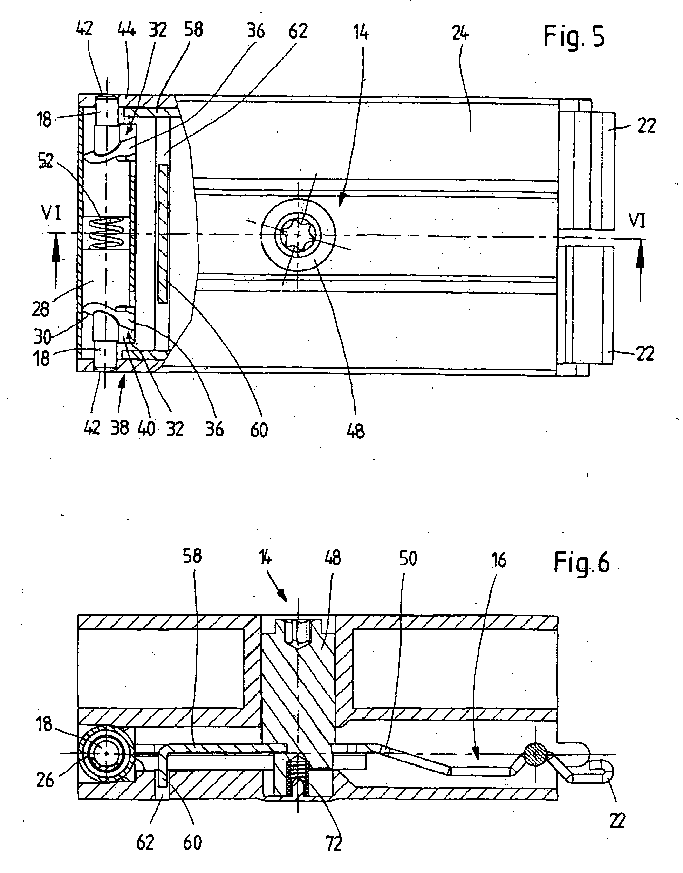

In den Figuren 5 und 6 ist nunmehr das Spannschloss 10 in einem Zustand dargestellt, in dem es einen nicht verriegelnden Zustand einnimmt und in dem die Haltestifte 18 vollständig in das Gehäuse 24 zurückgezogen sind, so dass das Gehäuse 24 und somit das Spannschloss 10 von der Strebe 20 gelöst werden kann. Diese Außereingriffs-Stellung der Haltestifte 18 wird dadurch erreicht, dass der Hebel 58 über ein nicht bezeichnetes Getriebe auf die Haltestifte 18 einwirkt, und zwar derart, dass sie im Wesentlichen vollständig in das Gehäuse 24 zurückgezogen werden. Hierzu wird der Bolzen 48 im nicht verriegelnden Zustand entgegen einer Vorspannung in das Gehäuse 24 hineingedrückt, wodurch sich der Hebel 58 quer zu seiner Längserstreckung in die gleiche Richtung wie der Bolzen 48 bewegt. Damit der Bolzen 48 diese Stellung einnehmen kann, weist der Hebel 58 einen Steg 62 auf, der in dieser Stellung in eine Ausnehmung 62 des Gehäuses 24 eingreift. Hierdurch kann erreicht werden, dass die zurückgezogene Stellung der Haltestifte 18 nur dann erreicht werden kann, wenn das Spannschloss 10 in der nicht verriegelnden Stellung ist. Befindet sich nämlich der Steg 60 nicht im Bereich der Ausnehmung 62, beispielsweise im verriegelnden Zustand, kann der Bolzen 48 nicht in das Gehäuse 24 hineingedrückt werden, weil der Steg 60 ein Eindrücken des Bolzens 48 dadurch verhindert, dass er an einer Gehäusewand ansteht. Erst in der nicht verriegelnden Stellung des Spannschlosses 10 befindet sich der Steg 60 im Bereich der Ausnehmung 62, so dass der Bolzen 48 durch Hineindrücken betätigt werden kann.

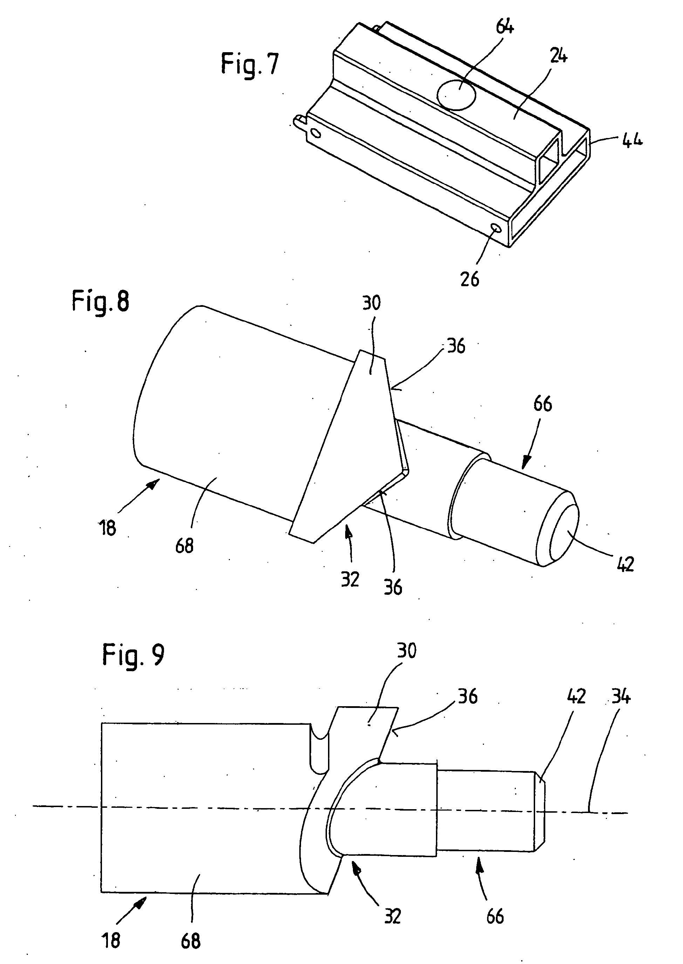

Aus Fig.7 ist das Gehäuse 24 ersichtlich, welches perspektivisch dargestellt ist. Das Gehäuse 24 weist eine Wand 44 auf, in welchem zentral die Bohrung 64 vorgesehen ist, in der der Bolzen 48 geführt ist. Ferner sind seitlich Bohrungen 26 vorgesehen, die zur Durchführung der Haltestifte 18 dienen.

Fig. 8 zeigt einen der Haltestifte 18 in einer perspektivischen Darstellung. Der Haltestift 18 weist einen Zapfen 68 auf, an dem sich ein Absatz 30 anschließt, der radial über den Haltestift 18 hinausragt. Daran schließt sich ein kreiszylindrischer Bereich 66 an, der für den Eingriff in die Bohrung 56 der Strebe 20 vorgesehen ist. In Fig. 9 ist eine seitliche Darstellung des Haltestifts 18 gemäß Fig. 8 dargestellt. Zu erkennen ist, dass der Absatz 30 eine Kulisse 32 als Widerlager bildet, die zumindest bereichsweise durch eine zur Längsachse 34 des Haltestifts 18 geneigte Fläche 36 gebildet ist. Zu erkennen ist aus den Figuren 8 und 9, dass der Absatz 30 nicht umlaufend ist.

Fig. 10 zeigt eine Hülse 28, die an ihren Enden Ausschneidungen 70 aufweist. In die Hülse 28 sind die Haltestifte 18 koaxial gegenüberliegend eingesetzt. Dabei liegen die Zapfen 68 der Haltestifte 18 einander gegenüber. Zwischen den Zapfen 68 ist ferner eine Spiralfeder 52 angeordnet, die die Haltestifte 18 axial mit einer Vorspannung beaufschlagt. Die hierdurch gebildete Baugruppe ist im Gehäuse 24 angeordnet (siehe Fig. 5) und mit diesem über eine Rastverbindung verbunden.

Im verriegelnden Zustand des Spannschlosses 10 werden die Haltestifte 18 aufgrund der Vorspannung durch die Feder 52 voneinander fort nach außen gedrückt, wobei die Bereiche 66 der Haltestifte 16 aus dem Gehäuse 24 herausragen und in die Bohrungen 56 der Strebe 20 eingreifen können. Um die eingezogene Position der Haltestifte 18 erreichen zu können, ist das Spannschloss 10 zunächst in den nicht verriegelnden Zustand zu überführen (Figuren 3, 4). Hierbei werden die Haltestifte 18 über eine Einwirkung des Hebels 58 auf die Kulisse 32 entgegen der Federkraft axial verschoben, so dass aufgrund der Kulissenführung der Kulisse 32 die Haltestifte 18 bereits teilweise in das Gehäuse 24 hineingezogen sind (Fig. 3). Durch ein Hineindrücken des Bolzens 48 in das Gehäuse 24 (Figuren 5, 6) wird mittels des Hebels 58 eine weitere Einwirkung auf die Fläche 36 der Kulisse 32 der Haltestifte 18 bewirkt, so dass diese vollständig in das Gehäuse 24 hineingezogen sind. Dabei ist vorliegend vorgesehen, dass Enden 42 der Haltestifte 18 sich noch innerhalb der Bohrungen 26 des Gehäuses 24 befinden, so dass eine Führung der Haltestifte 18 in dieser Stellung erreicht werden kann.

Der Bolzen 48 ist durch eine Feder 72 nach außen vorgespannt. Sobald eine auf den Bolzen 48 gerichtete Druckkraft in Richtung Gehäuse 24 nachlässt, wird aufgrund der Vorspannung durch die Feder 72 der Bolzen 48 wieder in seine herausgefahrene Position verbracht. Dabei wird die Bewegung der Haltestifte 18 zurückgeführt, so dass diese ihre teilweise herausgefahrene Position erreichen, wie sie in Fig. 3 dargestellt ist.

Zur Verbindung des Spannschlosses 10 mit der Strebe 20 wird während der Einschubbewegung des Spannschlosses 10 in die Ausnehmung der Strebe 20 der Bolzen 48 entgegen seiner Vorspannung in das Gehäuse 24 gedrückt, so dass die Haltestifte 18 in die eingefahrene Position verbracht werden. Nachdem der Gehäusebereich mit den Haltestiften 18 in die Ausnehmung der Strebe 20 eingeführt ist, kann die Druckwirkung auf den Bolzen 48 entfallen und die Haltestifte 18 werden aufgrund der Vorspannung durch die Feder 52 nach außen durch die Wand 44 des Gehäuses 24 gegen eine Innenseite der Ausnehmung der Strebe 20 gedrückt, bis die Endstellung des Spannschlosses 10 in der Strebe 20 erreicht ist und die Haltestifte 18 aufgrund ihrer Vorspannung in die Bohrungen 56 eingreifen. Das Spannschloss 10 ist dann an der Strebe 20 festgelegt.

Das in den Figuren dargestellte Ausführungsbeispiel dient lediglich der Erläuterung der Erfindung und ist für diese nicht beschränkend.

### Bezugszeichenliste

| | | | |
|---|---|---|---|
| 10 | Spannschloss | 60 | Steg |
| 12 | Pfosten | 62 | Ausnehmung |
| 14 | Antrieb | 64 | Bohrung |
| 16 | Ankereinheit | 66 | Bereich |
| 18 | Haltestift | 68 | Zapfen |
| 20 | Strebe | 70 | Ausschneidung |
| 22 | Klaue | 72 | Feder |
| 24 | Gehäuse | | |
| 26 | Bohrung | | |
| 28 | Hülse | | |
| 30 | Absatz | | |
| 32 | Kulisse | | |
| 34 | Längsachse | | |
| 36 | Fläche | | |
| 38 | Bereich | | |
| 40 | Absatz | | |
| 42 | Ende | | |
| 44 | Wand | | |
| 46 | Öffnung | | |
| 48 | Bolzen | | |
| 50 | Ankerelement | | |
| 52 | Feder | | |
| 54 | Torx-Ausnehmung | | |
| 56 | Bohrung | | |
| 58 | Hebel | | |

## Patentansprüche

1. Klemmverbinder (10) zur lösbaren Verbindung zweier Bauelemente (12, 20), mit einem Gehäuse (24), welches in einem Aufnahmeraum eines ersten der Bauelemente (20) festlegbar ist, wobei in dem Gehäuse (24) ein mittels eines Antriebs (14) zwischen einem verriegelnden und einem nicht verriegelnden Zustand bewegbares Ankerelement (50) einer Ankereinheit (16) angeordnet ist, welches Ankerelement (50) zur Verbindung der Bauelemente (12, 20) im verriegelten Zustand in eine Ausnehmung (46) des zweiten Bauelements (12) eingreifbar ist,
wobei zur Festlegung des Gehäuses (24) relativ gegenüber dem ersten Bauelement (20) wenigstens zwei Haltestifte (18) vorgesehen sind, die zum Zusammenwirken mit korrespondierenden Ausnehmungen (56) des ersten Bauelements (20) vorgesehen sind,
**gekennzeichnet durch**
eine Hülse (28), in der die Haltestifte (18) längsverschiebbar gelagert sind.

2. Klemmverbinder nach Anspruch 1, **dadurch gekennzeichnet, dass** jeder Haltestift (18) entlang seiner Längsachse (34) bewegbar ist.

3. Klemmverbinder nach Anspruch 1 oder 2, durch gekennzeichnet, dass die Haltestifte (18) durch Öffnungen (26) des Gehäuses (24) hindurch von innen nach außen ragen.

4. Klemmverbinder nach einem der Ansprüche 1 bis 3, **dadurch gekennzeichnet, dass** die Haltestifte (18) elastisch vorgespannt sind.

5. Klemmverbinder nach einem der Ansprüche 1 bis 4, **dadurch gekennzeichnet, dass** die Haltestifte (18) koaxial angeordnet sind.

6. Klemmverbinder nach Anspruch 1 bis 5, **dadurch gekennzeichnet, dass** in der Hülse (28) zwischen den Haltestiften (18) eine Feder (52) angeordnet ist.

7. Klemmverbinder nach Anspruch 1 bis 6, **dadurch gekennzeichnet, dass** die Hülse (28) mit dem Gehäuse (24) verbindbar ist.

8. Klemmverbinder nach einem der Ansprüche 1 bis 7, **gekennzeichnet durch** einen Antrieb für die Haltestifte (18).

9. Klemmverbinder nach Anspruch 8, **dadurch gekennzeichnet, dass** die Haltestifte (18) mit dem Antrieb (14) für die Ankereinheit (16) betätigbar sind.

10. Klemmverbinder nach Anspruch 8 oder 9, **dadurch gekennzeichnet, dass** der Antrieb (14) einen Betätigungsabschnitt (58) umfasst, der mit Widerlagern (32) der Haltestifte (18) zusammenwirkt.

11. Klemmverbinder nach Anspruch 10, **dadurch gekennzeichnet, dass** das Widerlager (32) durch eine gegenüber einer Längsachse (34) des Haltestifts (18) geneigte Fläche (36) gebildet ist.

12. Klemmverbinder nach Anspruch 10 oder 11, **dadurch gekennzeichnet, dass** der Betätigungsabschnitt (58) einstückig mit dem Ankerelement (50) ausgebildet ist.

13. Klemmverbinder nach einem der Ansprüche 3 bis 12, **dadurch gekennzeichnet, dass** die Haltestifte (18) in jeder durch sie einnehmbaren axialen Position durch die Öffnungen (26) des Gehäuses (24) geführt sind.

## Claims

1. A clamping connector (10) for the detachable connection of two construction elements (12, 20), comprising a housing (24) which can be fixed in a receiver space of a first one of the construction elements (20), wherein an anchor element (50) of an anchor unit (16) is disposed in the housing (24), which anchor element (50) can be displaced between a locking state and a non-locking state by means of a drive (14), which anchor element (50) can be engaged in a recess (46) of the second construction element (12) for connecting the construction elements (12, 20) in the locked state, wherein at least two retention pins (18) are provided for fixing the housing (24) with respect to the first construction element (20), which retention pins are provided for cooperating with corresponding recesses (56) of the first construction element (20),
**characterized by**
a socket (28) in which the retention pins (18) are accommodated such that they are displaceable in the longitudinal direction.

2. A clamping connector according to claim 1, **characterized in that** each retention pin (18) can be displaced along its longitudinal axis (34).

3. A clamping connector according to claim 1 or 2, **characterized in that** the retention pins (18) extend through openings (26) of the housing (24) from inside to the outside.

4. A clamping connector according to one of the claims 1 through 3, **characterized in that** the retention pins (18) are elastically pre-stressed.

5. A clamping connector according to one of the claims 1 through 4, **characterized in that** the retention pins (18) are disposed coaxially.

6. A clamping connector according to claims 1 through 5, **characterized in that** a spring (52) is disposed between the retention pins (18) in the socket (28).

7. A clamping connector according to claims 1 through 6, **characterized in that** the socket (28) can be connected to the housing (24).

8. A clamping connector according to one of the claims 1 through 7, **characterized by** a drive of the retention pins (18).

9. A clamping connector according to claim 8, **characterized in that** the retention pins (18) can be actuated by means of the drive (14) of the anchor unit (16).

10. A clamping connector according to claim 8 or 9, **characterized in that** the drive (14) comprises an actuating section (58) which cooperates with abutments (32) of the retention pins (18).

11. A clamping connector according to claim 10, **characterized in that** the abutment (32) is formed by a surface (36) that is inclined with respect to a longitudinal axis (34) of the retention pin (18).

12. A clamping connector according to claim 10 or 11, **characterized in that** the actuating section (58) is integrally formed with the anchor element (50).

13. A clamping connector according to one of the claims 3 through 12, **characterized in that** the retention pins (18) are guided through the openings (26) of the housing (24) in each axial position they can assume.

## Revendications

1. Connecteur à serrage (10) pour la liaison amovible de deux éléments de construction (12, 20), comprenant un boîtier (24) qui est susceptible d'être fixé dans un logement d'un premier des éléments de construction (20), un élément d'ancrage (50) d'une unité d'ancrage (16) lequel est déplaçable entre un état verrouillant et un état non-verrouillant par moyen d'un entraînement (14) étant disposé dans le boîtier (24), lequel élément d'ancrage (50) pouvant s'engrener dans un évidement (46) du deuxième élément de construction (12) pour relier les éléments de construction (12, 20) dans l'état verrouillé, au moins deux goupilles de serrage (18) étant prévus pour fixer le boîtier (24) par rapport au premier élément de construction (20), lesquels goupilles de serrage étant prévus pour coopérer avec des évidements correspondants (56) du premier élément de construction (20),
**caractérisé par**
une douille (28) dans laquelle les goupilles de serrage (18) sont logées de manière déplaçable dans la direction longitudinale.

2. Connecteur à serrage selon la revendication 1, **caractérisé en ce que** chaque goupille de serrage (18) est déplaçable le long de son axe longitudinal (34).

3. Connecteur à serrage selon la revendication 1 ou la revendication 2, **caractérisé en ce que** les goupilles de serrage (18) s'étendent de l'intérieur jusqu'à l'extérieur à travers des ouvertures (26) du boîtier (24).

4. Connecteur à serrage selon l'une des revendications 1 à 3, **caractérisé en ce que** les goupilles de serrage (18) sont précontraintes élastiquement.

5. Connecteur à serrage selon l'une des revendications 1 à 4, **caractérisé en ce que** les goupilles de serrage (18) sont disposées de manière coaxiale.

6. Connecteur à serrage selon l'une des revendications 1 à 5, **caractérisé en ce qu'**un ressort (52) est disposé entre les goupilles de serrage (18) dans la douille (28).

7. Connecteur à serrage selon les revendications 1 à 6, **caractérisé en ce que** la douille (28) est susceptible d'être reliée au boîtier (24).

8. Connecteur à serrage selon l'une des revendications 1 à 7, **caractérisé par** un entraînement des goupilles de serrage (18).

9. Connecteur à serrage selon la revendication 8, **caractérisé en ce que** les goupilles de serrage (18) sont actionnables par l'entraînement (14) de l'unité d'ancrage (16).

10. Connecteur à serrage selon la revendication 8 ou la revendication 9, **caractérisé en ce que** l'entraînement (14) comprend une section d'actionnement (58) qui coopère avec des aboutissements (32) des goupilles de serrage (18).

11. Connecteur à serrage selon la revendication 10, **caractérisé en ce que** l'aboutissement (32) est formé par une surface (36) inclinée par rapport à un axe longitudinal (34) de la goupille de serrage (18).

12. Connecteur à serrage selon la revendication 10 ou la revendication 11, **caractérisé en ce que** la section d'actionnement (58) est solidaire à l'élément d'ancrage (50).

13. Connecteur à serrage selon l'une des revendications 3 à 12, **caractérisé en ce que** les goupilles de serrage (18) sont guidées à travers des ouvertures (26) du boîtier (24) dans chaque position axiale qu'elles peuvent prendre.
